(19) Europäisches Patentamt
European Patent Office
Office européen des brevets

(11) EP 0 707 792 B1

# (12) EUROPÄISCHE PATENTSCHRIFT

(45) Veröffentlichungstag und Bekanntmachung des Hinweises auf die Patenterteilung:
**20.01.1999 Patentblatt 1999/03**

(21) Anmeldenummer: **95115677.7**

(22) Anmeldetag: **05.10.1995**

(51) Int. Cl.[6]: **A01N 37/24**
// (A01N37/24, 63:02, 59:20, 57:10, 55:02, 47:44, 47:32, 47:12, 45:02, 43:74, 43:707, 43:653, 43:54, 43:50, 43:40, 43:36, 43:32, 43:28, 37:52, 37:06)

## (54) Fungizide Wirkstoffkombinationen

Fungicidal combinations of active agents

Combinations d'agents actifs fongicides

(84) Benannte Vertragsstaaten:
**AT BE CH DE ES FR GB GR IT LI NL PT**

(30) Priorität: **17.10.1994 DE 4437048**

(43) Veröffentlichungstag der Anmeldung:
**24.04.1996 Patentblatt 1996/17**

(73) Patentinhaber: **BAYER AG**
**51368 Leverkusen (DE)**

(72) Erfinder:
- **Stenzel, Klaus, Dr.**
**D-40595 Düsseldorf (DE)**
- **Brandes, Wilhelm, Dr.**
**D-42799 Leichlingen (DE)**
- **Dutzmann, Stefan, Dr.**
**D-40721 Hilden (DE)**
- **Krüger, Bernd-Wieland, Dr.**
**D-51467 Bergisch Gladbach (DE)**
- **Kuck, Karl-Heinz, Dr.**
**D-40764 Langenfeld (DE)**
- **Pontzen, Rolf, Dr.**
**D-42799 Leichlingen (DE)**
- **Seitz, Thomas, Dr.**
**D-40764 Langenfeld (DE)**
- **Kamochi, Atsumi**
**Kochi-City, Kochi Prefecture (JP)**
- **Saitoh, Ikuya**
**Oayma-City, Tochigi Prefecture (JP)**

(56) Entgegenhaltungen:
**EP-A- 0 339 418** **EP-A- 0 626 135**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 707 792 B1

Printed by Xerox (UK) Business Services
2.16.7/3.6

## Beschreibung

Die vorliegende Anmeldung betrifft neue Wirkstoffkombinationen, die aus einer Verbindung der Formel I

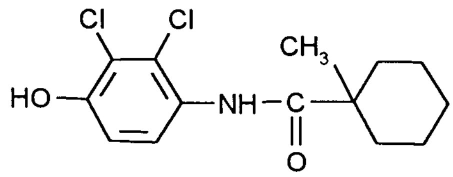

(I)

einerseits und weiteren bekannten fungiziden Wirkstoffen andererseits bestehen und sehr gut zur Bekämpfung von phytopathogenen Pilzen geeignet sind.

Es ist bereits bekannt, daß die Verbindung der Formel (I) fungizide Eigenschaften besitzt (vgl. EP-A 339418). Die Wirksamkeit dieses Stoffes ist gut; sie läßt jedoch bei niedrigen Aufwandmengen in manchen Fällen zu wünschen übrig.

Ferner ist schon bekannt, daß zahlreiche Azol-Derivate, aromatische Carbonsäure--Derivate, Morpholin-Verbindungen und andere Heterocyclen zur Bekämpfung von Pilzen eingesetzt werden können (vgl. K.H. Büchel "Pflanzenschutz und Schädlingsbekämpfung" Seiten 87, 136, 140, 141 und 146 bis 153, Georg Thieme Verlag, Stuttgart 1977). Die Wirkung der betreffenden Stoffe ist aber bei niedrigen Aufwandmengen nicht immer befriedigend.

Es wurde nun gefunden, daß die neuen Wirkstoffkombinationen aus einer Verbindung der Formel I

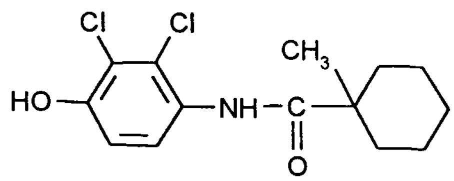

(I)

und

(A) Bupyrimat (Nimrod) und/oder
(B) Carbozoline (Serinal) und/oder
(C) Chinomethionat und/oder
(D) Cyprodinyl und/oder
(E) Dinocap und/oder
(F) Epoxiconazole und/oder
(G) Fenpropidin und/oder
(H) Fenpiclonil und/oder
(I) Fluquinconazole und/oder
(K) Guazatine und/oder
(L) 8-(1,1-Dimethylethyl)-N-ethyl-N-propyl-1,4-Dioxaspiro[4,5]decan-2-methanamin und/oder
(M) (E)-α-(Methoxyimino)-N-methyl-2-phenoxy-benzacetamid und/oder
(N) (E)-α-(Methoxyimono)-N-methyl-2-(2,5-dimethyl-phenoxy--methyl)-benzacetamid und/oder
(O) [2-Methyl-1-[[[1-(4-methylphenyl)ethyl]amino]carbonyl]propyl]-carbaminsäure-1-methylethylester und/oder
(P) N-[5-(2-Methoxy-pyridinyl)]-cyclopropan-carboxamid und/oder
(Q) Bromuconazol und/oder
(R) org. Cu-Zubereitungen, und/oder Cu-oxychinolat und/oder anorganische Cu-Zubereitungen außer Cu-oxychlorid und/oder
(S) Cyproconazole und/oder
(T) Diniconazole und/oder
(U) Dodine und/oder
(V) Ethirimol und/oder
(W) Fenarimol und/oder

(X) Fenbuconazole und/oder
(Y) Fenpiclonil und/oder
(Z) Fentinacetat und -hydroxid und/oder
(α) Imazalil und/oder
(β) Imibenconazol und/oder
(χ) Kasugamycin und/oder
(δ) Maneb und/oder
(ε) Metconazol und/oder
(ω) Nuarimol und/oder
(π) Oxycarboxin und/oder
(I) Polyoxin und/oder
(II) Propamocarb und/oder
(III) Propiconazole und/oder
(IV) Pyrazophos und/oder
(V) Pyrifenox und/oder
(VI) Tetraconazole und/oder
(VII) Thiabendazole und/oder
(VIII) Triazoxide und/oder
(IX) Triflumizole und/oder
(X) Triforine und/oder
(XI) Triticonazole und/oder
(XII) Zineb und/oder
(XIII) Ziram und/oder
(XIV) cis-1-(4-Chlorphenyl)-2-(1H-1,2,4-triazol-1-yl)-cycloheptanol und/oder
(XV) Diethirimol und/oder
(XVI) Edifenphos und/oder
(XVII) Fluoromide und/oder
(XVIII) Perfurazoate und/oder
(XIX) Pencycuron

sehr gute fungizide, sich synergistisch ergänzende Eigenschaften besitzen.

Der Wirkstoff der Formel (I) ist bekannt (EP-A-339 418). Die in den erfindungsgemäßen Kombinationen außerdem vorhandenen Komponente sind ebenfalls bekannt.

Die erfindungsgemäßen Wirkstoffkombinationen enthalten neben dem Wirkstoff der Formel (I) mindestens einen Wirkstoff der Verbindungen (A) bis (XIX). Bevorzugte Mischungspartner sind die Verbindungen (A) bis (P). Darüber hinaus können auch weitere fungizid wirksame Zumischkomponenten enthalten sein.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,01 bis 50, vorzugsweise 0,25 bis 20 Gewichtsteile der Verbindungen (A) bis (XIX).

Insbesondere entfallen auf 1 Gewichtsteil der Verbindung der Formel (I) die angegebenen Gewichtsteile für folgende Mischungspartner:

(A) 0,1 bis 50, vorzugsweise 0,25 bis 20,
(B) 0,1 bis 50, vorzugsweise 0,25 bis 20,
(C) 0,1 bis 50, vorzugsweise 0,1 bis 20,
(D) 0,1 bis 50, vorzugsweise 0,25 bis 10,
(E) 0,1 bis 50, vorzugsweise 0,25 bis 20,
(F) 0,01 bis 10, vorzugsweise 0,025 bis 5,
(G) 0,1 bis 50, vorzugsweise 0,25 bis 20,
(H) 0,01 bis 10, vorzugsweise 0,025 bis 5,
(I) 0,01 bis 20, vorzugsweise 0,025 bis 20,
(K) 0,01 bis 20, vorzugsweise 0,025 bis 20,
(L) 0,1 bis 50, vorzugsweise 1 bis 50,
(M) 0,01 bis 10, vorzugsweise 0,025 bis 10,
(N) 0,01 bis 10, vorzugsweise 0,025 bis 10,
(O) 0,1 bis 50, vorzugsweise 0,5 bis 50,

| | |
|---|---|
| (P) | 0,1 bis 50, vorzugsweise 0,1 bis 20, |
| (Q) | 0,01 bis 10, vorzugsweise 0,025 bis 5, |
| (R) | 1 bis 50, vorzugsweise 1 bis 20, |
| (S) | 0,01 bis 10, vorzugsweise 0,025 bis 5, |
| (T) | 0,01 bis 10, vorzugsweise 0,025 bis 5, |
| (U) | 0,1 bis 50, vorzugsweise 0,25 bis 20, |
| (V) | 0,1 bis 50, vorzugsweise 0,25 bis 20, |
| (W) | 0,1 bis 50, vorzugsweise 0,25 bis 20, |
| (X) | 0,01 bis 10, vorzugsweise 0,025 bis 5, |
| (Y) | 0,01 bis 10, vorzugsweise 0,025 bis 5, |
| (Z) | 0,1 bis 50, vorzugsweise 0,25 bis 20, |
| (α) | 0,01 bis 10, vorzugsweise 0,025 bis 5, |
| (β) | 0,01 bis 10, vorzugsweise 0,025 bis 5, |
| (χ) | 0,1 bis 50, vorzugsweise 0,25 bis 20, |
| (δ) | 0,1 bis 50, vorzugsweise 0,25 bis 20, |
| (ε) | 0,01 bis 10, vorzugsweise 0,025 bis 5, |
| (ω) | 0,1 bis 50, vorzugsweise 0,25 bis 20, |
| (π) | 0,1 bis 50, vorzugsweise 0,25 bis 20, |
| (I) | 0,1 bis 50, vorzugsweise 0,25 bis 20, |
| (II) | 0,1 bis 50, vorzugsweise 0,25 bis 20, |
| (III) | 0,01 bis 10, vorzugsweise 0,025 bis 5, |
| (IV) | 0,1 bis 50, vorzugsweise 0,25 bis 20, |
| (V) | 0,1 bis 50, vorzugsweise 0,25 bis 20, |
| (VI) | 0,01 bis 10, vorzugsweise 0,025 bis 5, |
| (VII) | 0,01 bis 10, vorzugsweise 0,025 bis 5, |
| (VIII) | 0,1 bis 50, vorzugsweise 0,25 bis 20, |
| (IX) | 0,01 bis 10, vorzugsweise 0,025 bis 5, |
| (X) | 0,1 bis 50, vorzugsweise 0,25 bis 20, |
| (XI) | 0,01 bis 10, vorzugsweise 0,025 bis 5, |
| (XII) | 0,1 bis 50, vorzugsweise 0,25 bis 20, |
| (XIII) | 0,1 bis 50, vorzugsweise 0,25 bis 20, |
| (XIV) | 0,1 bis 50, vorzugsweise 0,25 bis 20, |
| (XV) | 0,1 bis 50, vorzugsweise 0,25 bis 20, |
| (XVI) | 0,1 bis 50, vorzugsweise 0,25 bis 20, |
| (XVII) | 0,1 bis 50, vorzugsweise 0,25 bis 20, |
| (XVIII) | 0,1 bis 50, vorzugsweise 0,25 bis 20, |
| (XIX) | 0,1 bis 50, vorzugsweise 0,25 bis 20. |

Die erfindungsgemäßen Wirkstoffkombinationen besitzen sehr gute fungizide Eigenschaften und lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Pyrenophora und Leptosphaeria, und gegen Pilzbefall an Gemüse, Wein und Obst, beispielsweise gegen Venturia an Äpfeln, Botrytis an Bohnen und Phytophthora an Tomaten.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage. Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und

Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide, sich synergistisch ergänzende Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad, ausgedruckt in % der unbehandelten Kontrolle, beim Einsatz des Wirkstoffes A in einer Konzentration von m ppm,

Y den Wirkungsgrad, ausgedrückt in % der unbehandelten Kontrolle, beim Einsatz des Wirkstoffes B in einer Konzentration von m ppm,

E den erwarteten Wirkungsgrad, ausgedrückt in % der unbehandelten Kontrolle, beim Einsatz der Wirkstoff A und B in einer Konzentrationen von m und n ppm bedeutet,

dann ist

$$E = X + Y - \frac{X \cdot Y}{100}.$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E):

**Beispiele**

**Botrytis - Test (Bohne) / protektiv**

Zur Herstellung einer zweckmäßigen Wirkstoffzubereitung werden entweder handelsübliche Wirkstoff-Formulierungen (einzelne Wirkstoffe oder Wirkstoffkombinationen), oder 1 Gewichtsteil Wirkstoff mit 4,7 Gewichtsteilen Lösungsmittel (Aceton) und 0,3 Gewichtsteilen Emulgator (Alkyl-Aryl-Polyglykolether) vermischt und mit Wasser auf die jeweils gewünschte Konzentration verdünnt.

Zur Prüfung auf protektive Wirksamkeit bepritzt man junge Pflanzen mit der Wirkstoffzubereitung bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20°C aufgestellt. 3 Tage nach der Inokulation wird die Größe der Befallsflecken auf den Blättern ausgewertet.

Um Synergismus zwischen den in diesem Versuch verwendeten Wirkstoffen aufzuzeigen, wurden die Resultate nach der von Colby beschriebenen Methode (s.o.) ausgewertet.

Wirkstoffe, Wirkstoffkonzentrationen und Versuchsergebnisse gehen aus den folgenden Tabellen hervor.

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| Chinometionat | 50 | 0 |
| Erfindungsgemäße Mischung: | | |
| (I) + Chinometionat | 5 + 50 | 63 |
| Erwartungswert, berechnet nach der Colby-Formel (s.o.) | | 29 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| Fenpropidin | 50 | 0 |
| Erfindungsgemäße Mischung: | | |
| (I) + Fenpropidin | 5 + 50 | 90 |
| Erwartungswert, berechnet nach der Colby-Formel (s.o.) | | 29 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| Fludioxonil | 1 | 5 |
| Erfindungsgemäße Mischung: | | |
| (I) + Fludioxonil | 5 + 1 | 85 |
| Erwartungswert, berechnet nach der Colby-Formel (s.o.) | | 33 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| Fluquinconazol | 25 | 29 |
| Erfindungsgemäße Mischung: | | |
| (I) + Fluquinconazol | 5 + 25 | 81 |
| Erwartungswert, berechnet nach der Colby-Formel (s.o.) | | 50 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| (N) | 12,5 | 64 |
| Erfindungsgemäße Mischung: | | |
| (I) + (N) | 5 + 12,5 | 85 |
| Erwartungswert, berechnet nach der Colby-Formel (s.o.) | | 74 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| (M) | 25 | 28 |
| Erfindungsgemäße Mischung: | | |
| (I) + (M) | 5 + 25 | 55 |
| Erwartungswert, berechnet nach der Colby-Formel (s.o.) | | 49 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| (L) | 200 | 0 |
| Erfindungsgemäße Mischung: | | |
| (I) + (L) | 5 + 200 | 78 |
| Erwartungswert, berechnet nach der Colby-Formel (s.o.) | | 29 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| (O) | 200 | 19 |
| Erfindungsgemäße Mischung: | | |
| (I) + (O) | 5 + 200 | 81 |
| Erwartungswert, berechnet nach der Colby-Formel (s.o.) | | 42 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| Natriumhydroxymethyl-sulfinat | 200 | 32 |
| Erfindungsgemäße Mischung: | | |
| (I) + Natriumhydroxymethyl-sulfinat | 5 + 200 | 86 |
| Erwartungswert, berechnet nach der Colby-Formel (s.o.) | | 52 |

Tabelle 1
Botrytis - Test (Bohne) / protektiv

| Wirkstoff | Wirkstoff-konzentation in ppm | Wirkungsgrad in % der unbehandelten Kontrolle |
|---|---|---|
| (I) | 5 | 29 |
| Ciprodinyl | 5 | 5 |
| Erfindungsgemäße Mischung: | | |
| (I) + Ciprodinyl | 5 + 5 | 46 |
| Erwartungswert, berechnet nach der Colby-Formel (s.o.) | | 33 |

**Beispiel 2**

Argarplattentest mit Penicillium custosum

Verwendeter Nährboden: 39 Gewichtsteile Potato-Dextrose-Agar
20 Gewichtsteile Agar-Agar

werden in 1 000 ml destilliertem Wasser gelöst und 20 Minuten bei 121°C autoklaviert.

Lösungsmittel: 50 Gewichtsteile Aceton
950 Gewichtsteile Wasser

Mengenverhältnis von Lösungsmittel zu Nährboden 1:100

Zur Herstellung einer zweckmäßigen Wirkstoffzubereitung vermischt man 1 Gewichtsteil Wirkstoff mit der angegebenen Menge Lösungsmittel.

Das Konzentrat wird im genannten Mengenverhältnis mit dem flüssigen Nährboden gründlich vermischt und in Petrischalen gegossen.

Ist der Nährboden erkaltet und fest, werden die Platten mit folgenden Mikroorganismen beimpft und bei ca. 21°C inkubiert: Penicillium custosum.

Die Auswertung erfolgt nach 6 Tagen, wobei die Wachstumshemmung als Maß für die Wirkung der Präparate herangezogen wird.

Die erfindungsgemäß eingesetzte Verbindungen zeigen in diesem Test eine deutliche Überlegenheit gegenüber dem Stand der Technik.

Tabelle
Agarplattentest mit Penicillium custosum

| Wirkstoff | Wirkstoff-konzentation in ppm | Wirkungsgrad in % der unbehandelten Kontrolle |
|---|---|---|
| (I) | 100 | 24 |
| Guazatine | 100 | 9 |
| Erfindungsgemäße Mischung: | | |
| (I) + Guazatine | 100 + 100 | 56 |
| Erwartungswert, berechnet nach der Colby-Formel (s.o.) | | 31 |

**Beispiel 3**

**Erysiphe-Test (Gerste) / protektiv**

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit Sporen von Erysiphe graminis f.sp. hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

## Tabelle

**Erysiphe-Test (Gerste) / protektiv**

| Wirkstoff | Wirkstoff-aufwand-menge in g/ha | Wirkungs-grad in % der unbehan-delten Kontrolle |
|---|---|---|
| Bekannt: (I) | 125 | 18 |
| Iminoctadin-triacetat "Befran" | 125 | 27 |
| 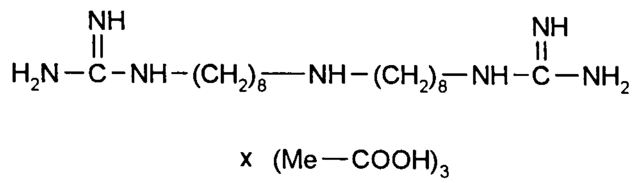 | | |
| Erfindungsgemäße Mischung: | | |
| (I) + Iminoctadin-triacetat | 62,5 + 62,5 | 55 |

### Beispiel 4

**Erysiphe-Test (Weizen) / protektiv**

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit Sporen von Erysiphe graminis f.sp. tritici bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

## Tabelle

### Erysiphe-Test (Weizen) / protektiv

| Wirkstoff | Wirkstoffaufwandmenge in g/ha | Wirkungsgrad in % der unbehandelten Kontrolle |
|---|---|---|
| Bekannt: (I) | 125 | 25 |
| Chinomethionat "Morestan" 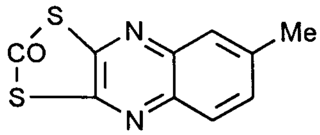 | 125 | 9 |
| Erfindungsgemäße Mischung: (I) + Chinomethionat | 62,5 + 62,5 | 41 |

**Beispiel 5**

**Leptosphaeria nodorum-Test (Weizen) / protektiv**

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von ca. 80 % aufgestellt.

10 Tage nach der Inokulation erfolgt die Auswertung.

## Tabelle

### Leptosphaeria nodorum-Test (Weizen) / protektiv

| Wirkstoff | Wirkstoff-aufwand-menge in g/ha | Wirkungs-grad in % der unbehan-delten Kontrolle |
|---|---|---|
| Bekannt: (I) | 125 | 57 |
| Epoxiconazole "Opus" 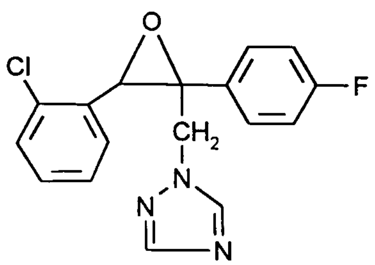 | 125 | 57 |
| Erfindungsgemäße Mischung: (I) + Epoxiconazole | 62,5 + 62,5 | 100 |

**Beispiel 6**

**Erysiphe-Test (Gerste) / kurativ**

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung in der angegebenen Aufwandmenge besprüht.

Die Pflanzen werden in einem Gewächshaus bei einer Temperatur von ca. 20°C und einer realtiven Luftfeutchtigkeit von ca. 80 % aufgestellt, um die Entwicklung von Mehltaupusteln zu begünstigen.

7 Tage nach der Inokulation erfolgt die Auswertung.

Um Synergismus zwischen den in diesem Versuch verwendeten Wirkstoffen aufzuzeigen, wurden die Resultate nach der von R.S. Colby beschriebenen Methode (Calculating Synergistic and Antagonistic Responses of Herbicides Combinations; Weeds 15, 20-22, 1967) ausgewertet. Der erwartete Wirkungsgrad in % der unbehandelten Kontrolle wurde gemäß der Gleichung

$$E = x + y - \frac{x \cdot y}{100}$$

berechnet. Dabei bedeuten x bzw. y den Wirkungsgrad - ausgrdrückt in % der unbehandelten Kontrolle -, den die beiden Präparate bei einer getrennten Anwendung erzielen. Ist der tatsächliche Wirkunngsgrad der Wirkstoffkombination größer als der nach der oben angeführten Formel errechnete Wert für den erwarteten Wirkungsgrad (E), so ist die Wirkung überadditiv, d.h. es liegt ein synergistischer Effekt vor.

**Tabelle**

**Erysiphe-Test (Gerste) / kurativ**

| Wirkstoff | Wirkstoff-aufwand-menge in g/ha | Wirkungs-grad in % der unbehan-delten Kontrolle |
|---|---|---|
| Bekannt: (I) | 20 | 25 |
| 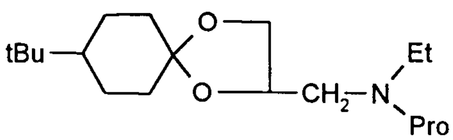 | 10 | 66 |
| Erfindungsgemäße Mischung: | tatsächlicher Wirkungsgrad nach Anwendung der Mischung in % der unbehandelten Kontrolle | erwarteter Wirkungsgrad (E) nach Anwendung der Mischung in % der unbehandelten Kontrolle |
| | 100 | 75 |
| (I) + KWG 4168 | 20 + 10 | |

**Beispiel 7**

**Fusarium nivale-Test (Weizen) / Saatgutbehandlung**

Die Anwendung der Wirkstoffe erfolgt als Trockenbeizmittel. Sie werden zubereitet durch Abstrecken des jeweiligen Wirkstoffes mit Gesteinsmehl zu einer feinpulverigen Mischung, die eine gleichmäßige Verteilung auf der Saargutoberfläche gewährleistet.

Zur Beizung schüttelt man das infizierte Saatgut 3 Minuten lang mit dem Beizmittel in einer verschlossenen Glasflasche.

Den Weizen sät man mit 2 x 100 Korn 1 cm tief in eine Standarderde und kultiviert ihn im Gewächshaus bei einer Temperatur von ca. 10°C und einer relativen Luftfeuchtigkeit von ca. 95 % in Saatkästen, die täglich 15 Stunden dem Licht ausgesetzt werden.

Ca. 3 Wochen nach der Aussaat erfolgt die Auswertung der Pflanzen auf Symptome des Schneeschimmels.

## Tabelle

### Fusarium nivale-Test (Weizen) / Saatgutbehandlung

| Wirkstoff | Wirkstoffaufwandmenge in mg/kg Saatgut | Wirkungsgrad in % der unbehandelten Kontrolle |
|---|---|---|
| Bekannt: (I) | 100 | 22 |
| | 25 | 0 |
| Guazatine | 100 | 55 |
| 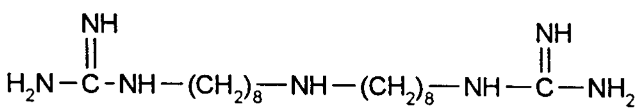 | | |
| Fenpiclonil "CGA 142705" | 25 | 6 |
| 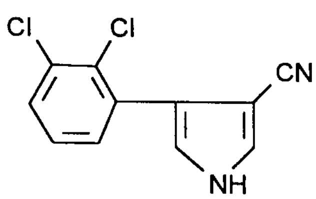 | | |
| Erfindungsgemäße Mischung: | | |
| (I) + Guazatine | 50 + 50 | 65 |
| (I) + Fenpiclonil | 12,5 + 12,5 | 31 |

**Beispiel 8**

**Drechslera graminea-Test (Gerste) / Saatgutbehandlung (syn. Helminthosporium gramineum)**

Die Anwendung der Wirkstoffe erfolgt als Trockenbeizmittel. Sie werden zubereitet durch Abstrecken des jeweiligen Wirkstoffes mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Das Saatgut setzt man in gesiebter, feuchter Standarderde eingebettet, in verschlossenen Petrischalen im Kühlschrank 10 Tage lang einer Temperatur von 4°C aus. Dabei wird die Keimung der Gerste und gegebenenfalls auch der Pilzsporen eingeleitet. Anschließend sät man die vorgekeimte Gerste mit 2 x 50 Korn 3 cm tief in eine Standarderde und kultiviert sie im Gewächshaus bei einer Temperatur von ca. 18° in Saatkästen, die täglich 15 Stunden dem Licht ausgesetzt werden.

Ca. 3 Wochen nach der Aussaat erfolgt die Auswertung der Pflanzen auf Symptome der Streifenkrankheit.

**Tabelle**

**Drechslera graminea-Test (Gerste) / Saatgutbehandlung (syn. Helminthosporium granineum)**

| Wirkstoff | Wirkstoff-aufwand-menge in mg/kg Saatgut | Wirkungs-grad in % der unbehan-delten Kontrolle |
|---|---|---|
| Bekannt: (I) | 100 | 43 |
| | 50 | 41 |
| Ethirimol 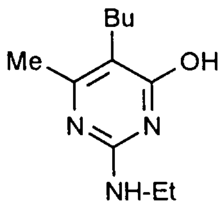 | 100 | 8 |
| Fenpiclonil "CGA 142705" 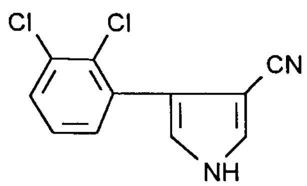 | 50 | 41 |
| Erfindungsgemäße Mischung: | | |
| (I) + Ethirimol | 50 + 50 | 54 |
| (I) + Fenpiclonil | 25 + 25 | 69 |

**Patentansprüche**

1. Fungizide Mittel, gekennzeichnet durch einen Gehalt an einer Wirkstoffkombination bestehend aus einer Verbindung der Formel (I)

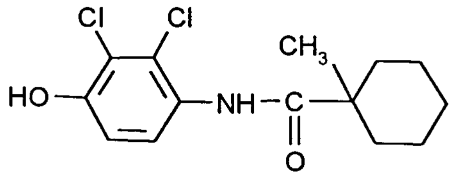

(I)

und

| | |
|---|---|
| (A) | Bupyrimat (Nimrod) und/oder |
| (B) | Carbozoline (Serinal) und/oder |
| (C) | Chinomethionat und/oder |
| (D) | Cyprodinyl und/oder |
| (E) | Dinocap und/oder |
| (F) | Epoxiconazole und/oder |
| (G) | Fenpropidin und/oder |
| (H) | Fenpiclonil und/oder |
| (I) | Fluquinconazole und/oder |
| (K) | Guazatine und/oder |
| (L) | 8-(1,1-Dimethylethyl)-N-ethyl-N-propyl-1,4-Dioxaspiro[4,5]decan-2-methanamin und/oder |
| (M) | (E)-α-(Methoxyimino)-N-methyl-2-phenoxy-benzacetamid und/oder |
| (N) | (E)-α-(Methoxyimono)-N-methyl-2-(2,5-dimethyl-phenoxymethyl)benacetamid und/oder |
| (O) | [2-Methyl-1-[[[1-(4-methylphenyl)ethyl]amino]carbonyl]propyl]-carbaminsäure-1-methylethylester und/oder |
| (P) | N-[5-(2-Methoxy-pyridinyl)]-cyclopropan-carboxamid und/oder |
| (Q) | Bromuconazol und/oder |
| (R) | org. Cu-Zubereitungen und/oder Cu-oxychinolat und/oder anorganische Cu-Zubereitungen außer Cu-oxychlorid und/oder |
| (S) | Cyproconazole und/oder |
| (T) | Diniconazole und/oder |
| (U) | Dodine und/oder |
| (V) | Ethirimol und/oder |
| (W) | Fenarimol und/oder |
| (X) | Fenbuconazole und/oder |
| (Y) | Fenpiclonil und/oder |
| (Z) | Fentinacetat und -hydroxid und/oder |
| (α) | Imazalil und/oder |
| (β) | Imibenconazol und/oder |
| (χ) | Kasugamycin und/oder |
| (δ) | Maneb und/oder |
| (ε) | Metconazol und/oder |
| (ω) | Nuarimol und/oder |
| (π) | Oxycarboxin und/oder |
| (I) | Polyoxin und/oder |
| (II) | Propamocarb und/oder |
| (III) | Propiconazole und/oder |
| (IV) | Pyrazophos und/oder |
| (V) | Pyrifenox und/oder |
| (VI) | Tetraconazole und/oder |
| (VII) | Thiabendazole und/oder |
| (VIII) | Triazoxide und/oder |
| (IX) | Triflumizole und/oder |

(X) Triforine und/oder
(XI) Triticonazole und/oder
(XII) Zineb und/oder
(XIII) Ziram und/oder
(XIV) cis-1-(4-Chlorphenyl)-2-(1H-1,2,4-triazol-1-yl)-cycloheptanol und/oder
(XV) Diethirimol und/oder
(XVI) Edifenphos und/oder
(XVII) Fluoromide und/oder
(XVIII) Perfurazoate und/oder
(XIX) Pencycuron.

2. Mittel gemäß Anspruch 1, dadurch gekennzeichnet, daß in den Wirkstoffkombinationen das Gewichtsverhältnis von Wirkstoff der Formel (I) zu Wirkstoffen der Gruppe (A) bis (XIX) 1:0,01 bis 1:50 ist.

3. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

4. Verwendung von Wirkstoffkombinationen gemäß Anspruch 1 zur Bekämpfung von Pilzen.

5. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

## Claims

1. Fungicidal compositions, characterized in that they comprise an active compound combination composed of a compound of the formula (I)

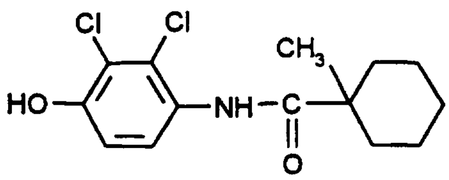

(I)

and

(A) bupyrimate (Nimrod) and/or
(B) carbozoline (serinal) and/or
(C) quinomethionate and/or
(D) cyprodinyl and/or
(E) dinocap and/or
(F) epoxiconazole and/or
(G) fenpropidin and/or
(H) fenpiclonil and/or
(I) fluquinconazole and/or
(K) guazatine and/or
(L) 8-(1,1-dimethylethyl)-N-ethyl-N-propyl-1,4-dioxaspiro[4,5] decane-2-methaneamine and/or
(M) (E)-α-(methoxyimino)-N-methyl-2-phenoxy-benzacetamide and/or
(N) (E)-α-(methoxyimono)-N-methyl-2-(2,5-dimethyl-phenoxymethyl)-benzacetamide and/or
(O) 1-methylethyl [2-methyl-1-[[[1-(4-methylphenyl)ethyl]amino] carbonyl]propyl]carbamate and/or
(P) N-[5-(2-methoxy-pyridinyl)]-cyclopropane-carboxamideand/or
(Q) bromuconazole and/or
(R) organic Cu preparations, and/or Cu oxyquinolate and/or inorganic Cu preparations, with the exception of Cu oxychloride, and/or
(S) cyproconazole and/or
(T) diniconazole and/or
(U) dodine and/or

(V) ethirimol and/or
(W) fenarimol and/or
(X) fenbuconazole and/or
(Y) fenpiclonil and/or
(Z) fentin acetate and fentin hydroxide and/or
(α) imazalil and/or
(β) imibenconazole and/or
(χ) kasugamycin and/or
(δ) maneb and/or
(ε) metconazole and/or
(ω) noarimol and/or
(π) oxycarboxin and/or
(I) polyoxin and/or
(II) propamocarb and/or
(III) propiconazole and/or
(IV) pyrazophos and/or
(V) pyrifenox and/or
(VI) tetraconazole and/or
(VII) thiabendazole and/or
(VIII) triazoxide and/or
(IX) triflumizole and/or
(X) triforine and/or
(XI) triticonazole and/or
(XII) zineb and/or
(XIII) ziram and/or
(XIV) cis-1-(4-chlorophenyl)-2-(1H-1,2,4-triazol-1-y1)-cycloheptanol and/or
(XV) diethirimol and/or
(XVI) edifenphos and/or
(XVII) fluoromide and/or
(XVIII) perfurazoate and/or
(XIX) pencycuron.

2. Composition according to Claim 1, characterized in that, in the active compound combinations, the ratio by weight of active compound of the formula (I) to active compounds from group (A) to (XIX) is from 1:0.01 to 1:50.

3. Method of combating fungi, characterized in that active compound combinations according to Claim 1 are allowed to act on the fungi and/or their environment.

4. Use of active compound combinations according to Claim 1 for combating fungi.

5. Process for the preparation of fungicidal compositions, characterized in that active compound combinations according to Claim 1 are mixed with extenders and/or surface-active substances.

## Revendications

1. Compositions fongicides, caractérisées par une teneur en une association de substances actives consistant en un composé de formule (I)

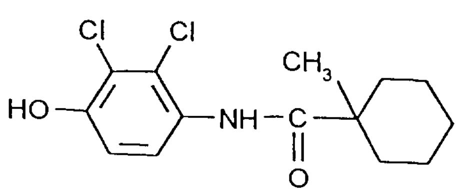

(I)

et en

(A) Bupyrimat (Nimrod) et/ou
(B) Carbozoline (Serinal) et/ou
(C) Chinométhionate et/ou
(D) Cyprodinyl et/ou
(E) Dinocap et/ou
(F) Epoxiconazole et/ou
(G) Fenpropidine et/ou
(H) Fenpiclonil et/ou
(I) Fluquinconazole et/ou
(K) Guazatine et/ou
(L) 8-(1,1-diméthyléthyl)-N-éthyl-N-propyl-1,4-dioxaspiro[4,5]décane-2-méthanamine et/ou
(M) (E)-α-(méthoxyimino)-N-méthyl-2-phénoxybenzacétamide et/ou
(N) (E)-α-(méthoxyimino)-N-méthyl-2-(2,5-diméthylphénoxyméthyl)benzacétamide et/ou
(O) Ester 1-méthyléthylique d'acide [2-méthyl-1-[[[1-(4-méthylphenyl)éthyl]amino]carbonyl]-propyl]-carbamique et/ou
(P) N-[5-(2-méthoxypyridinyl)]-cyclopropanecarboxamide et/ou
(Q) Bromuconazole et/ou
(R) Préparation organique contenant du cuivre et/ou oxyquinolate de cuivre et/ou préparations inorganiques contenant du cuivre en plus de l'oxychlorure de cuivre et/ou
(S) Cyproconazole et/ou
(T) Diniconazole et/ou
(U) Dodine et/ou
(V) Ethirimol et/ou
(W) Fenarimol et/ou
(X) Fenbuconazole et/ou
(Y) Fenpiclonil et/ou
(Z) Fentine-acétate et -hydroxyde et/ou
(α) Imazalil et/ou
(β) Imibenconazole et/ou
(χ) Kasugamycine et/ou
(δ) Manèbe et/ou
(ε) Metconazole et/ou
(ω) Nuarimol et/ou
(π) Oxycarboxine et/ou
(I) Polyoxine et/ou
(II) Propamocarbe et/ou
(III) Propiconazole et/ou
(IV) Pyrazophos et/ou
(V) Pyrifénox et/ou
(VI) Tétraconazole et/ou
(VII) Thiabendazole et/ou
(VIII) Triazoxyde et/ou
(IX) Triflumizole et/ou
(X) Triforine et/ou
(XI) Triticonazole et/ou
(XII) Zinèbe et/ou
(XIII) Ziram et/ou
(XIV) cis-1-(4-chlorophényl)-2-(1H-1,2,4-triazole-1-yl)-cycloheptanol et/ou
(XV) Diéthirimol et/ou
(XVI) Edifenphos et/ou
(XVII) Fluoromide et/ou
(XVIII) Perfurazoate et/ou
(XIX) Pencycuron.

**2.** Compositions suivant la revendication 1, caractérisées en ce que dans les associations de substances actives, le rapport en poids de la substance active de formule (I) aux substances actives du Groupe (A) à (XIX) a une valeur de 1:0,01 à 1:50.

**3.** Procédé pour combattre des champignons, caractérisé en ce qu'on fait agir des associations de substances actives suivant la revendication 1 sur les champignons et/ou sur leur milieu.

**4.** Utilisation d'associations de substances actives suivant la revendication 1 pour combattre des champignons.

**5.** Procédé de préparation de compositions fongicides, caractérisé en ce qu'on mélange des associations de substances actives suivant la revendication 1 avec des diluants et/ou des agents tensio-actifs.